(19) Europäisches Patentamt / European Patent Office / Office européen des brevets

(11) **EP 1 845 193 A1**

(12) **DEMANDE DE BREVET EUROPEEN**

(43) Date de publication:
**17.10.2007 Bulletin 2007/42**

(51) Int Cl.:
***D21H 27/00*** *(2006.01)* ***B31F 1/07*** *(2006.01)*

(21) Numéro de dépôt: **06290613.6**

(22) Date de dépôt: **14.04.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Georgia-Pacific France**
**68320 Kunheim (FR)**

(72) Inventeurs:
• **Barredo, Donald**
**68040 Ingersheim (FR)**

• **Graff, Pierre**
**68600 Wolfgantzen (FR)**
• **Probst, Pierre**
**68770 Ammerschwihr (FR)**

(74) Mandataire: **Thomas, Nadine**
**GEORGIA-PACIFIC FRANCE,**
**Département Propriété Intellectuelle,**
**23, Boulevard Georges Clemenceau**
**92415 Courbevoie Cedex (FR)**

(54) **Feuille absorbante délitable multiplis, rouleau et procédé de fabrication associés**

(57) L'invention concerne une feuille absorbante délitable multi-plis, sensiblement rectangulaire, à base d'ouate de cellulose qui présente un coefficient $K_{NOVE}$ = $R_{SM}$ x $R_{ST}$ x A x S x G x Exp (12 x (E + Ep)) x (1/Exp (Sp)) > 45 000 avec

$R_{ST}$
= résistance selon la largeur de la feuille en N/m

$R_{SM}$
= résistance selon la longueur de la feuille en N/m

G
= grammage de la feuille en kg/m²

E
= épaisseur de la feuille en mm

Sp
= souplesse de la feuille en N

A
= absorption de la feuille en kg/feuille

S
= surface de la feuille en m²

$E_p$
= épaisseur moyenne d'un pli de la feuille en mm

L'invention vise en outre le procédé de fabrication d'une telle feuille, ainsi que des rouleaux constitués par lesdites feuilles.

FIG.1

EP 1 845 193 A1

## Description

La présente invention concerne le domaine des feuilles de papier absorbant en matériau fibreux tel que l'ouate de cellulose, comprenant au moins trois plis, préférentiellement cinq ou plus.

Le domaine d'application préféré de l'invention est celui du papier à usage sanitaire ou domestique voire cosmétique tel que le papier toilette, mais aussi l'essuie-tout, les mouchoirs ou encore les « formats » utilisables pour nettoyer et/ou démaquiller la peau.

D'une façon générale, ce type de produits doit présenter un certain nombre de caractéristiques telles que douceur, souplesse, résistance à sec et/ou humide, absorption, épaisseur mais aussi délitabilité ...

Selon l'application envisagée, l'un ou plusieurs autres de ces paramètres prévaudra, et les produits connus présentent ainsi soit une bonne douceur, soit une excellente absorption, soit une parfaite résistance...

Par ailleurs, l'aspect visuel est aussi un paramètre à prendre en compte : l'esthétique des produits absorbants connus peut être réalisé par le gaufrage de la feuille, ou encore par des motifs d'impression à l'encre, plus ou moins visibles et harmonieux, ou encore par une combinaison des deux techniques.

Concernant le papier toilette, on cherchera à obtenir une bonne résistance, une certaine épaisseur ainsi qu'une grande douceur. La résistance et la douceur peuvent paraître difficilement compatibles mais en combinant certaines fibres et/ou certains grammages à un traitement tel que le calandrage, on obtient de bons résultats.

Cependant, les produits connus ne présentent pas l'ensemble des caractéristiques souhaitées et énoncées ci-avant ; un choix est donc généralement réalisé, qui permet d'aboutir à un produit présentant une ou deux des caractéristiques techniques ci-dessus énoncées.

L'objet de la présente invention est de réaliser simultanément des performances sur l'ensemble des caractéristiques.

Une démarche qui peut paraître simple et évidente consiste à associer un grand nombre de plis pour former une feuille absorbante très épaisse. Cette démarche est restée jusqu'à ce jour de nature théorique car des problèmes techniques surviennent lorsque l'on souhaite associer quatre plis et plus : soit on doit prévoir plusieurs postes de collage, soit des moyens d'association mécaniques nécessitant une forte pression sur chacun des plis formant la feuille sont nécessaires.

Les postes de collage induisent chacun des problèmes d'encrassement, de maintenance, d'encombrement sur la ligne de fabrication ... d'où des surcoûts et/ou des complications dans la fabrication.

D'autre part de trop fortes pressions produisent une usure prématurée des rouleaux ou cylindres de fabrication, un écrasement des motifs de gaufrage et/ou des vibrations qui se révèlent non seulement nuisibles pour les cylindres eux-mêmes mais qui en outre ont un effet négatif sur la qualité et la fiabilité des feuilles produites.

On connaît la demande de brevet WO 97/20107 qui décrit une feuille de papier absorbant multi plis dont les plis sont associés en phase de transformation par une méthode dite « dry marking » qui consiste à déformer sous contrainte la feuille dans son épaisseur, par passage entre un rouleau gravé à surface externe rigide et un rouleau lisse de surface externe moins dure que le rouleau gravé.

On obtient ainsi un produit multi plis associé uniquement mécaniquement, et marqué dans certaines régions.

Par ailleurs des feuilles de papier absorbant très épaisses et/ou utilisées simultanément en trop grand nombre peuvent induire des bouchages dans les canalisations.

Pourtant un besoin existe, particulièrement mais non exclusivement concernant le papier toilette, pour un papier à la fois plus épais, résistant, doux, souple, absorbant et facilement délitable.

En effet, avec un papier présentant l'ensemble de ces caractéristiques, l'utilisateur peut n'utiliser qu'un seul format (ou feuille) à la fois, c'est-à-dire à chaque essuyage, d'où des économies non négligeables quand on sait qu'avec les papiers toilette connus, plusieurs feuilles (quatre ou cinq) sont couramment utilisées par les consommateurs à chaque utilisation.

Ainsi en consommant moins de feuilles à chaque utilisation, le risque de bouchage des canalisations est fortement réduit.

La présente invention propose une solution non évidente, simple, fiable et adaptable à plusieurs types de production.

Le papier toilette représente une application préférée de l'invention, mais l'invention est également envisageable pour d'autres produits tels que les formats pour nettoyer, démaquiller ou autres soins de la peau, ainsi que l'essuie-tout, les mouchoirs en papier ...

La présente invention a pour objet une feuille absorbante délitable multi-plis, sensiblement rectangulaire à base d'ouate de cellulose, et comprenant au moins trois plis.

Par ailleurs, la feuille présente un coefficient $K_{NOVE} = R_{SM} \times R_{ST} \times A \times S \times G \times Exp(12 \times (E + E_P)) \times (1/Exp(Sp)) > 45\,000$ avec

$R_{ST}$ = résistance selon la largeur de la feuille en N/m

$R_{SM}$ = résistance selon la longueur de la feuille en N/m

G = grammage de la feuille en kg/m$^2$

E = épaisseur de la feuille en mm

Sp = souplesse de la feuille en N

A = absorption de la feuille en kg/feuille

S = surface de la feuille en m$^2$

$E_P$ = épaisseur moyenne d'un pli de la feuille en mm.

Selon une autre caractéristique, la feuille absorbante présente en outre un coefficient $K_D = K_{NOVE}$ x exp (D) > 130 000,

D étant une valeur de douceur comprise entre -3 et +3.0

Une douceur remarquable est ainsi obtenue selon l'invention, pour une feuille par ailleurs à la fois épaisse et souple.

Conformément à l'invention, la feuille absorbante présente une résistance à la traction selon sa longueur supérieure à environ 700 N/m.

Préférentiellement, la feuille présente une résistance à la traction selon sa largeur supérieure à environ 300 N/m.

Ainsi, une telle feuille absorbante présente simultanément des caractéristiques de douceur, épaisseur, ainsi qu'une exceptionnelle résistance à la traction à la fois selon sa longueur et selon sa largeur.

De façon particulière, la feuille peut comprendre entre 3 et 12 plis, préférentiellement entre 3 et 9 plis ; chaque pli pouvant lui-même comprendre un groupe de plis.

Avantageusement, la feuille peut présenter une épaisseur supérieure à environ 0,75 mm.

Cette épaisseur incite l'utilisateur à utiliser un nombre réduit de feuilles, préférablement une seule, à chaque utilisation.

De façon particulière, le grammage des feuilles selon l'invention est supérieur ou égal à environ 70 g/m$^2$.

Les feuilles peuvent présenter une longueur d'environ 140 mm et une largeur d'environ 110 mm, notamment pour des utilisations en tant que papier hygiénique.

Un tel format est plutôt supérieur au format des feuilles connues, d'où encore une fois, une dissuasion de prendre plusieurs feuilles simultanément.

Par ailleurs, dans le cadre de l'utilisation comme papier hygiénique, les rouleaux selon l'invention peuvent comprendre entre 60 et 120 feuilles, nombre largement inférieur aux rouleaux de papier toilette classiques. Bien entendu, vu les caractéristiques intrinsèques de chaque feuille, ceci n'induit pas un surcoût pour l'utilisateur puisque l'un des avantages importants de l'invention réside dans la consommation d'une seule feuille au lieu de trois, quatre, voire plus, à chaque utilisation.

On reconnaît là un gain financier important, nettement favorable et apprécié par les acheteurs.

En outre, malgré l'épaisseur importante des feuilles, des rouleaux peuvent être formés sans problème. Ceci est rendu possible grâce aux caractéristiques intrinsèques des feuilles selon l'invention, qui présentent simultanément une élasticité et une souplesse remarquables et tout à fait compatibles avec un enroulement, même au centre du rouleau où les rayons de courbure sont les plus faibles.

Par ailleurs, l'invention a pour objet un procédé de fabrication de feuilles absorbantes délitables consistant à gaufrer séparément et différemment au moins trois des plis formant ladite feuille, à associer chimiquement lesdites feuilles grâce à une unique unité de collage puis à associer mécaniquement l'ensemble des plis grâce à un cylindre de pression.

Sans sortir du cadre de l'invention, le procédé de fabrication peut consister, en phase humide, à projeter un ensemble de fibres papetières sur une toile afin de former un matelas, à transférer ce matelas contre la surface d'un cylindre de séchage poreux, à faire traverser le matelas par des jets d'air issus dudit cylindre, puis à transférer le pli ainsi formé sur un cylindre de crêpage. On forme ainsi plusieurs plis indépendamment les uns des autres puis ultérieurement en phase dite sèche, on associe ensemble lesdits plis par déformation mécanique.

Selon un mode préféré de réalisation de l'invention, l'une au moins des surfaces externes de la feuille est obtenue par ce procédé.

Selon ces procédés, la pression spécifique minimale d'association des plis est de l'ordre de 3 kg/mm$^2$.

L'invention vise en outre une feuille absorbante délitable multi plis comprenant des plis obtenus par l'un des procédés ci-dessus et/ou des plis obtenus par l'autre des procédés précités.

D'autres caractéristiques, avantages, détails de l'invention apparaîtront mieux à la lecture de la description qui va suivre faite à titre illustratif et nullement limitatif, en référence aux dessins annexés sur lesquels :

- la figure 1 est une coupe schématique dans l'épaisseur d'une feuille réalisée selon l'un des modes de réalisation de l'invention ;

- la figure 2 est un schéma illustratif d'une installation permettant de fabriquer des feuilles selon l'un des modes de réalisation de l'invention ;
- la figure 3 est une perspective simplifiée d'un rouleau obtenu conformément à l'invention.

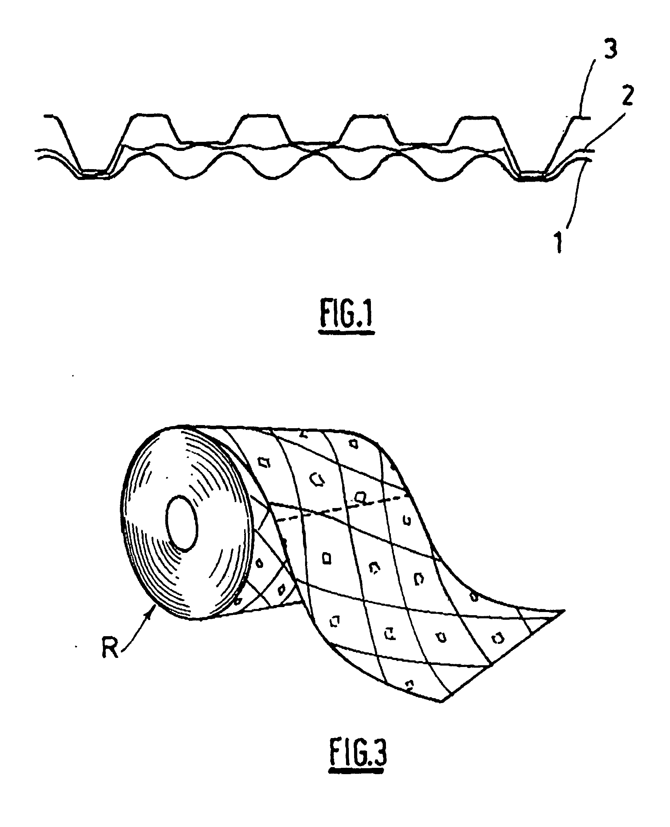

Conformément à la figure 1, une feuille multi-plis selon l'invention peut présenter une structure présentant au moins trois plis ou groupe de plis 1, 2,3.

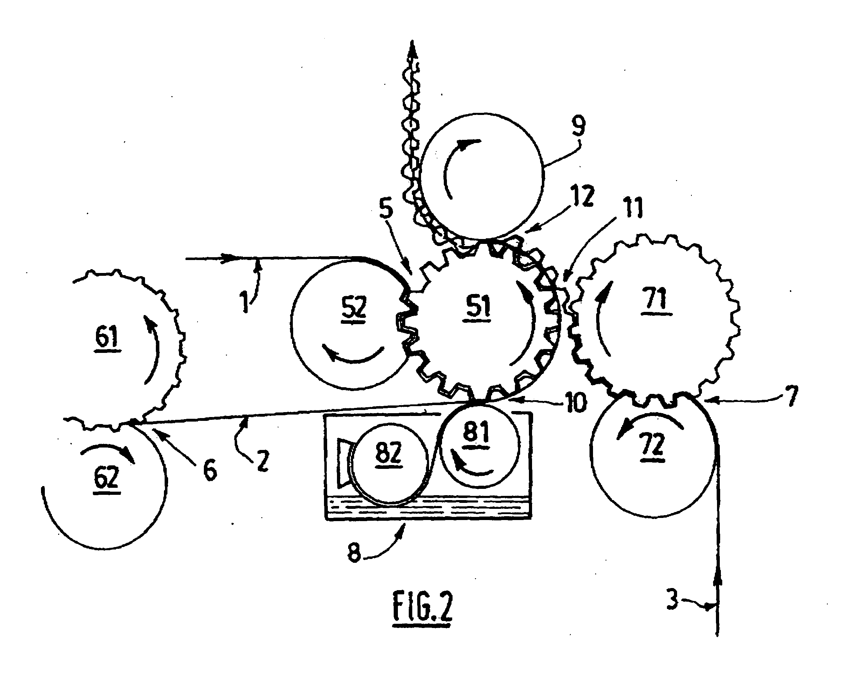

Selon l'un des modes de réalisation de l'invention chaque pli ou groupe de plis est gaufré indépendamment (comme il sera explicité plus en détail en relation avec la figure 2) et différemment.

A titre illustratif, le premier pli (ou groupe de plis) 1 peut être un pli extérieur, gaufré avec un motif dit esthétique ; le deuxième pli 2 (ou groupe de plis) est disposé à l'intérieur de la feuille et comprend un microgaufrage grossier ; par « microgaufrage grossier » il faut par exemple comprendre un microgaufrage comprenant environ 25 protubérances par $cm^2$. Ce pli confère et assure de l'épaisseur à la feuille ainsi qu'une certaine rigidité et une bonne tenue mécanique.

Le troisième pli 3 (ou groupe de plis) forme la deuxième surface externe de la feuille et peut avantageusement être muni d'un microgaufrage, c'est-à-dire d'un gaufrage comprenant au moins 30 protubérances par $cm^2$ .

Le troisième pli permet ainsi de limiter l'effet d'envers, c'est-à-dire la trace visible du gaufrage du premier pli sur le troisième pli, et il permet surtout d'éviter une sensation désagréable au toucher.

Chaque pli peut présenter ou non la même nature.

L'expression « groupe de plis » signifie que chacun desdits premier, deuxième et/ou troisième pli précités peuvent en fait être constitué d'un ou de plusieurs plis.

En outre, les plis 1, 2, 3 sont collés entre eux au niveau de points et/ou lignes de colle 4. La nature de la colle ainsi que son taux de dilution sont connus en eux-mêmes et aisément déterminables par l'homme du métier dans l'exercice habituel de ses compétences.

Avantageusement, la colle est déposée sur l'une des surfaces internes de la feuille comme il est visible sur la figure 1.

La figure 2 montre de façon schématique une installation susceptible de fabriquer des feuilles conformément à un mode de réalisation de l'invention. Le procédé associé sera décrit en relation avec cette figure 2.

Ainsi, chacun des plis 1, 2, 3 est gaufré de façon connue en soi entre un cylindre gravé en acier 51, 61, 71 et un cylindre en caoutchouc 52, 62, 72.

Chacun des plis a été fabriqué au préalable en voie humide par la technologie bien connue de l'homme de l'art du type CWP (Conventional Wet Press).

A titre illustratif le premier pli 1 est gaufré dans un « nip » 5 entre le premier cylindre gravé 51 et le premier cylindre lisse 52, la gravure du premier cylindre 51 étant telle qu'un motif de gaufrage plutôt esthétique (motifs) est réalisé sur le premier pli 1 (ou groupe de plis) qui constituera l'une des surfaces externes de la feuille.

L'autre surface externe de la feuille est constituée par le troisième pli 3 (ou groupe de plis) qui est gaufré dans un « nip » 7 entre le troisième cylindre gravé 71 et le troisième cylindre lisse 72. La gravure du troisième cylindre gravé 71 est telle qu'un micro-gaufrage est par exemple formé sur le troisième pli (ou groupe de plis) 3. De façon habituelle un micro-gaufrage est défini par une densité de protubérances supérieure ou égale à 30 par $cm^2$.

En outre, le deuxième pli 2 (ou groupe de plis) est intercalé entre les premier et troisième pli.

Le deuxième pli est gaufré entre le deuxième cylindre de gaufrage 61 et le deuxième cylindre lisse 62, au niveau d'un deuxième « nip » 6.

Préférentiellement, le gaufrage obtenu est un micro-gaufrage grossier comme déjà évoqué ci-avant.

Une fois gaufré, le deuxième pli 2 est dirigé vers une unité d'encollage 8, connue en elle-même, qui comprend essentiellement un cylindre plongeur 82 et un cylindre applicateur 81.

L'unité d'encollage 8 est préférentiellement disposée sous le premier cylindre gravé 51, de sorte que le cylindre applicateur 81 coopère avec le premier cylindre gravé 51 au niveau d'un nip 10.

Plus précisément, le cylindre applicateur 81 vient en appui sur le cylindre gravé 51 par l'intermédiaire du deuxième pli 2 et du premier pli 1 superposés. Le cylindre plongeur 82 transfère l'adhésif depuis la réserve de colle de l'unité 8 vers le cylindre applicateur 81. Le cylindre applicateur 81 exerce une certaine pression sur le cylindre gravé 51 au niveau de la surface distale des protubérances du premier pli gaufré 1. Avec une pression suffisante, la colle traverse le deuxième pli 2 et l'association des plis 1 et 2 en est améliorée.

Dans une variante de réalisation, le cylindre applicateur de colle 81 peut présenter une surface gravée dans le but de n'appliquer de la colle que sur une partie seulement des sommets de la gravure. En réduisant la surface encollée, on peut ainsi améliorer la souplesse du produit fini.

L'adhésif utilisé 4 peut être une colle standard de type PVA ou thermofusible (hotmelt). On a utilisé à titre d'exemple une colle commercialisée par la société SWIFT. Cette colle a été diluée à l'eau dans des proportions optimales pour obtenir le transfert approprié sur les plis.

Selon un autre mode de réalisation, on pulvérise par des moyens appropriés une colle « hotmelt » sur chacune des faces du deuxième pli. Dans ce cas, il faut appliquer la colle avant que le pli 2 vienne au contact des deux autres plis.

Selon encore un autre mode de réalisation, on applique un adhésif aqueux par pulvérisation sur le pli central 2.

Après avoir passé le nip 10, c'est-à-dire une fois associés entre eux, les plis 1 et 2 sont associés au troisième pli gaufré 3.

Les plis passent d'abord (selon la flèche 11) entre le premier cylindre gravé 51 et le troisième cylindre gravé 71 puis ils sont associés au niveau d'un nip 12 via des points de colle 4 grâce à un cylindre marieur 9 qui coopère avec le premier cylindre gravé 51.

Cette association est réalisée entre le cylindre marieur 9 dont la dureté est moindre que celle du premier cylindre de gaufrage 51, avec une pression spécifique de l'ordre de 10 kg/mm$^2$.

Il est à remarquer que selon le mode de réalisation de l'invention qui vient d'être décrit, les au moins trois plis (ou groupe de plis) formant la feuille ont chacun subi en phase de transformation ou converting, une déformation différente.

Cette caractéristique induit à la fois du gonflant, de la douceur et une esthétique harmonieuse à chaque feuille.

Sans sortir du cadre de l'invention, l'association des plis peut être réalisée par moletage entre des molettes (dures) gravées et des cylindres lisses moins durs. La déformation par moletage est de type mécanique mais elle ne concerne alors que des bandes plus ou moins larges sur les plis.

D'une façon générale, l'association par moletage est moins bonne que l'association par gaufrage et/ou collage, et l'impression de relief définie par un moletage est moins visible qu'avec une association par gaufrage et/ou collage.

A titre illustratif, le brevet US 3 377 224 divulgue un procédé de moletage classique.

En accord avec l'invention, l'association des plis peut être réalisée par une technique dite de « dry marking », par exemple conformément aux enseignements du brevet EP 864 014 B1 : selon ce procédé connu, on fait successivement passer les plis à associer entre un premier cylindre récepteur sensiblement élastique et un cylindre gravé, puis entre ce même cylindre et un deuxième cylindre sensiblement élastique fixe ; le premier cylindre récepteur et le cylindre gravé étant mobiles et le deuxième cylindre élastique étant fixe, on obtient une association de plis telle que la feuille présente une face lisse et une face ayant des motifs imprimés d'épaisseur réduite.

La particularité du procédé selon l'invention est de pouvoir associer au moins trois plis ou groupe de plis. Plus précisément le nombre total de plis peut être N = n + m + p ; n, m, p étant chacun un nombre entier préférentiellement et non limitativement compris entre 1 et 3.

Selon l'invention, l'association des plis est avantageusement réalisée grâce à un unique dépôt de colle, lorsque chacun des plis est obtenu en voie humide par une technique de type CWP.

Une autre particularité intéressante de l'invention réside dans le fait que la feuille absorbante est délitable c'est-à-dire se désagrège facilement dans l'eau, malgré le nombre élevé de plis qui la constitue. La délitabilité (délitage) au sens de l'invention est notamment celle définie par la norme française NF Q 34-020. Cette norme s'applique aux articles à usage sanitaire et domestique, notamment aux papiers hygiéniques et elle concerne la mesure du délitage de tels produits.

Conformément à une caractéristique remarquable de l'invention, les feuilles absorbantes présentent un coefficient $K_{NOVE} = R_{SM} \times R_{ST} \times A \times S \times G \times \text{Exp} (12 \times (E + E_P)) \times (1/\text{Exp} (S_p)) > 45\ 000$ avec

$R_{ST}$ = résistance à la traction de la feuille selon la largeur de la feuille en N/m

$R_{SM}$ = résistance à la traction de la feuille selon la longueur de la feuille en N/m

G = grammage de la feuille en kg/m$^2$

E = épaisseur de la feuille en mm

Sp = souplesse de la feuille en N

A = absorption de la feuille en kg/feuille

S = surface de la feuille en m$^2$

$E_P$ = épaisseur moyenne d'un pli de la feuille en mm

Toutes les feuilles dont les caractéristiques répondent à cette inégalité présentent à la fois de l'épaisseur, de la douceur, une bonne résistance. Il est tout à fait inattendu de trouver simultanément ces caractéristiques dans une feuille absorbante facilement délitable.

C'est pourquoi les applications envisageables de l'invention sont nombreuses et variées : papier toilette, essuie-tout, produit nettoyant, démaquillant.

La « résistance à la traction » ou plus précisément « résistance à la rupture par traction » définie dans la norme NF EN 12625-4, partie 4, est la force maximale de traction, supportée par unité de largeur d'une éprouvette de papier tissue ou de produit tissue jusqu'à la rupture, dans un essai de traction. Le principe de cet essai est d'étirer jusqu'à la rupture, à une vitesse constante d'allongement de 50 mm/min, une éprouvette de 50 mm de large et d'au moins 150 mm de long.

Pour ce faire, on place successivement les échantillons à mesurer, entre deux mâchoires d'un appareil d'essai (tel que précisément défini dans la norme EN 12625-4) : au moins 20 échantillons sont soumis à l'essai.

Les mâchoires de l'appareil s'écartent l'une de l'autre à une vitesse constante d'environ 50 mm/min, on enregistre toutes les valeurs significatives des forces lors de la rupture des échantillons.

Puis on calcule la moyenne desdites forces de rupture : F, (exprimée en N) afin de déterminer la résistance moyenne à la rupture en traction Sp exprimée en N/m telle que :

$$S = \frac{F \times 10^3}{wi}$$

avec wi : largeur initiale de l'éprouvette (normalement 50 mm).

Concernant la souplesse Sp de la feuille, exprimée en N, celle-ci est déterminée par une méthode dite « ring and rod » qui consiste à faire passer la feuille de surface S à travers un trou de diamètre légèrement supérieur au grand diamètre d'un tronc de cône entouré par la feuille. On mesure la force de traction sur la feuille avant et pendant son passage à travers le trou que l'on reporte sur un graphe ayant pour abscisse la force de traction (en N) et en ordonnée le déplacement du tronc de cône (en mm). Lors du passage à travers le trou, la pente de la courbe change et l'on relève la valeur de la force au niveau du point d'inflexion. Cette valeur est corrélée à la souplesse Sp (en N) de ladite feuille.

Le paramètre S est la surface de la feuille en question, exprimée en m$^2$.

E est l'épaisseur mesurée de la feuille obtenue selon la norme Européenne EN 12625-3, tandis que Ep est l'épaisseur moyenne d'un pli de ladite feuille.

A est l'absorption de la feuille, en kg par feuille, c'est-à-dire la masse de liquide absorbé par la feuille de surface S. Ce paramètre est déterminé selon les conditions de la norme EN 12625-8.

En outre, concernant sa douceur, le produit absorbant selon l'invention peut être caractérisé par un coefficient $K_D = K_{NOVE} \times Exp (D) > 130\ 000$, D étant un nombre compris entre -3 et +3 obtenu selon le test suivant :

La personne qui teste le produit, choisit un qualificatif relatif à la douceur sur une échelle verbale. La méthode consiste à attribuer des notes à cette échelle verbale suivant le tableau de correspondance ci-après, en comparant chacune des feuilles du test avec un même témoin 0 :

Echelle verbale/Note

Nettement moins doux : -3
Moins doux : - 2
Probablement moins doux : - 1
Pas de différence : 0
Probablement plus doux +1
Plus doux : +2
Nettement plus doux : +3

On multiplie ensuite le nombre de personnes ayant choisi un qualificatif de douceur donné par la note correspondant à ce qualificatif. Puis on fait la somme des points obtenus que l'on divise par le nombre total de personnes, pour obtenir une note moyenne. Cette note moyenne D située entre -3 et +3, donne le résultat du test pour un produit donné.

Le Tableau ci-après donne des valeurs pour différents types de feuilles obtenues selon l'invention, et pour différents produits connus.

| | Produit | A Absorption Kg/feuille | S Surface M² | Ep Epaisseur/plis Mm | Nombre De plis | G Grammage Kg/m² | E Epaisseur Mm | R$_{SM}$ Résistance SM N/m | R$_{ST}$ Résistance ST N/m | D Douceur | Sp Souplesse N | K NOVE | K douceur |
|---|---|---|---|---|---|---|---|---|---|---|---|---|---|
| Invention | 9 plis | 0,0185 | 0,0154 | 0,123 | 9 | 0,148 | 1,11 | 1017 | 392 | 1 | 3,05 | 2.126.263 | 5.779.783 |
| | 5 plis (2TAD + 1CWP + 2TAD) | 0,0172 | 0,0154 | 0,186 | 5 | 0,097 | 0,93 | 396 | 242 | 1,5 | 1,50 | 359.272 | 1.610.145 |
| | 7 plis | 0,0140 | 0,0154 | 0,134 | 7 | 0,114 | 0,94 | 704 | 234 | 1 | 1,85 | 253.490 | 689.058 |
| | 6 plis | 0,0142 | 0,0154 | 0,150 | 6 | 0,110 | 0,9 | 580 | 260 | 1 | 1,85 | 169.501 | 460.752 |
| Art antérieur | Moltonel | 0,0055 | 0,0123 | 0,207 | 3 | 0,051 | 0,62 | 350 | 180 | 1,2 | 0,65 | 2.316 | 7.688 |
| | Royal | 0,0055 | 0,0127 | 0,173 | 3 | 0,052 | 0,52 | 322 | 173 | 1 | 0,70 | 416 | 1.131 |
| | Lotus Confort | 0,0043 | 0,0125 | 0,160 | 2 | 0,041 | 0,32 | 235 | 97 | 2,2 | 0,23 | 13 | 116 |
| | Lotus Petite Fleur | 0,0041 | 0,0126 | 0,165 | 2 | 0,040 | 0,33 | 208 | 87 | 2,2 | 0,38 | 10 | 88 |

De ce tableau il ressort clairement que l'invention, via notamment les coefficients $K_{NOVE}$ et $K_D$ prédéfinis, se distingue de l'art antérieur. L'invention permet d'améliorer simultanément la douceur du produit, sa résistance et sa souplesse.

Par ailleurs, les feuilles selon l'invention sont rectangulaires ou sensiblement rectangulaires et présentent une résistance à la traction supérieure à environ 700 N/m selon leur longueur, et supérieure à environ 300 N/m selon leur largeur.

Ces valeurs peuvent être considérées comme hautes comparativement aux valeurs connues : on connaît par exemple le papier toilette « SERVUS » (4 plis) commercialisé en Allemagne par la société HAKLE qui présente une résistance de 605 N/m selon sa longueur. Ceci est une des valeurs les plus élevées des papiers toilette actuellement commercialisés, comme le révèle le tableau ci-avant.

La résistance à la traction de ce même papier selon sa largeur se situe aux alentours de 208 N/m.

Concernant la résistance à la traction selon la largeur de chaque feuille, le produit « ULTRA CARE » commercialisé en Allemagne par la société HAKLE présente une résistance d'environ 283 N/m selon sa largeur, valeur considérée comme très élevée. Par contre ce papier présente une résistance d'environ 593 N/m selon sa longueur.

Ainsi la présente invention présente une exceptionnelle résistance à la traction, à la fois selon sa longueur et selon sa largeur, ainsi que d'autres caractéristiques notamment celle relative au coefficient $K_{NOVE}$.

La caractéristique relative à la résistance à la traction obtenue selon l'invention associée ou non aux autres caractéristiques autorise favorablement la consommation d'une seule feuille par utilisation, et non de plusieurs comme cela se fait jusqu'à présent.

De façon surprenante et inattendue, les résistances précitées ne diminuent d'aucune façon la douceur du produit obtenu, ni sa souplesse.

L'épaisseur préférée est supérieure à 0,75 mm et le grammage supérieur à environ 70 g/m$^2$.

Ces valeurs, élevées comparativement à la plupart des produits connus, renforcent le caractère unitaire de la consommation du produit.

Afin de renforcer encore l'utilisation feuille à feuille, dans le cas de papier hygiénique, une dimension de 140 mm x 110 mm est préférée.

Conformément à un mode de réalisation de l'invention, les feuilles absorbantes sont liées entre elles par des prédécoupes et forment ensemble un rouleau.

Etant donné les caractéristiques intrinsèques des feuilles telles que notamment énoncées ci-avant, le taux de prédécoupe peut être choisi à environ 0,15 par mm. Ce taux permet une découpe aisée et fiable de chaque feuille.

Dans le cas d'une application en papier toilette, l'invention permettant avantageusement de ne consommer qu'une feuille par utilisation, des rouleaux comportant un nombre réduit de feuilles, c'est-à-dire entre 60 et 120 au lieu d'environ 150 habituellement, sont formés ; cette réduction n'étant nullement pénalisante pour l'utilisateur.

Par ailleurs, de façon surprenante et inattendue, les plis formant les feuilles selon l'invention ne se désassocient pas entre eux lors de la formation des rouleaux. Ceci semble être notamment dû à leur bonne association ainsi qu'à leur grande souplesse et élasticité.

Selon un autre mode de réalisation de l'invention, les feuilles peuvent être empilées, puis éventuellement emballées pour former des paquets.

Avantageusement, conformément au mode de réalisation illustré par la figure 2 au niveau du marieur 9, les plis sont associés entre eux sous une pression spécifique d'environ 10 kg/mm$^2$. La pression spécifique est plus particulièrement appliquée au niveau des points et/ou des lignes de collage régulièrement réparties dans le sens travers, selon des génératrices du premier cylindre de gravure 51.

Plus précisément, la pression spécifique doit être constante sur toute la surface développée du premier cylindre 51, afin notamment de diminuer les vibrations donc l'usure dudit cylindre.

En fonction de la nature et des caractéristiques finales de la feuille obtenue, la pression spécifique peut varier de 3 à 16 kg/mm$^2$.

A titre illustratif, des feuilles comprenant neuf plis ont été fabriquées selon l'invention. Leur grammage est d'environ 150 g/m$^2$, et leur épaisseur d'environ 1 mm. La pression spécifique au niveau du marieur est alors d'environ 11 kg/mm$^2$. Le procédé de fabrication correspondant est réalisé avec une installation telle que schématisée sur la figure 2 et explicité ci-avant. Vis-à-vis de la figure 1, chacun des plis 1, 2 et 3 est ici constitué de trois plis réunis, de façon connue en soi, en amont de chaque unité de gaufrage (51, 52 ; 61, 62 ; 71, 72). En outre chaque pli est ici fabriqué au préalable en voie humide selon une technique dite CWP.

La feuille absorbante multi plis selon l'invention peut comprendre uniquement des plis ainsi formés, qui sont finalement associés ensemble conformément à la figure 2.

Sans sortir du cadre de l'invention, les plis peuvent être fabriqués en phase humide selon une technique dite TAD (through air drying) connue en elle-même et qui consiste, globalement, à projeter un ensemble de fibres papetières sur une toile afin de former un matelas, à transférer ce matelas contre la surface d'un cylindre de séchage poreux, à faire traverser le matelas par des jets d'air issus dudit cylindre, puis à transférer le pli ainsi formé sur un cylindre dit de crêpage. On forme ainsi un ou plusieurs plis.

Des plis formés en phase humide conformément à l'enseignement de la demande EP 1 353 010 peuvent également faire partie d'une feuille selon l'invention.

L'association des plis pourra être réalisée avec une installation selon la figure 2, qui pourra comprendre ou non une unité d'encollage.

L'invention vise en outre des feuilles comprenant à la fois des plis obtenus selon une technique conventionnelle (dite CWP) et des plis réalisés selon la technique TAD.

Les plis de type TAD peuvent constituer les deux faces extérieures de telles feuilles. Un toucher très doux est alors obtenu. Les plis intérieurs peuvent être réalisés selon une technique CWP ou autre.

Sans sortir du cadre de l'invention, les plis extérieurs peuvent être fabriqués en voie humide selon une technique conventionnelle (CWP) et former les deux faces extérieures de la feuille. Dans cette configuration, les plis intérieurs peuvent être réalisés selon une technique de type TAD.

Bien entendu, une combinaison de plis visant à obtenir une feuille ayant une face formée d'un pli conventionnel et une face formée selon une technique de type TAD, peut aussi être réalisée sans sortir du cadre de l'invention.

On choisira l'une ou l'autre des combinaisons selon le cas d'espèce c'est-à-dire en fonction du toucher, de l'absorption, de la souplesse prioritairement souhaitées, ou encore selon des contraintes d'ordre économique.

Par ailleurs, il est parfaitement envisageable de réaliser une feuille selon l'invention sans utiliser de colle pour associer les plis, quelque soit la nature de chacun des plis (ou groupe de plis) qui constitue ladite feuille.

**Revendications**

1. Feuille absorbante délitable multi-plis, sensiblement rectangulaire, à base d'ouate de cellulose, comprenant au moins trois plis, **caractérisée en ce qu'**elle présente un coefficient $K_{NOVE} = R_{SM} \times R_{ST} \times A \times S \times G \times Exp\ (12 \times (E + E_P)) \times (1/Exp\ (Sp)) > 45\ 000$ avec

   $R_{ST}$ = résistance selon la largeur de la feuille en N/m
   $R_{SM}$ = résistance selon la longueur de la feuille en N/m
   G = grammage de la feuille en $kg/m^2$
   E = épaisseur de la feuille en mm
   Sp = souplesse de la feuille en N
   A = absorption de la feuille en kg/feuille
   S = surface de la feuille en $m^2$
   $E_P$ = épaisseur moyenne d'un pli de la feuille en mm

2. Feuille absorbante selon la revendication 1, **caractérisée en ce qu'**elle présente en outre un coefficient $K_D = K_{NOVE}$ x exp (D) > 130 000, D étant une valeur de douceur comprise entre -3 et +3.

3. Feuille absorbante délitable multi-plis, selon l'une quelconque des revendications précédentes, **caractérisée en ce qu'**elle présente une résistance à la traction selon sa longueur supérieure à environ 700 N/m.

4. Feuille selon l'une quelconque des revendications précédentes, **caractérisée en ce qu'**elle présente une résistance à la traction selon sa largeur supérieure à environ 300 N/m.

5. Feuille selon l'une quelconque des revendications précédentes, **caractérisée en ce qu'**elle comprend entre 3 et 12 plis, préférentiellement entre 3 et 9 plis.

6. Feuille selon l'une quelconque des revendications précédentes, **caractérisée en ce que** chaque pli comprend un groupe de plis.

7. Feuille selon l'une quelconque des revendications précédentes, **caractérisée en ce qu'**elle présente une épaisseur supérieure à environ 0,75 mm.

8. Feuille selon l'une quelconque des revendications précédentes, **caractérisée en ce qu'**elle présente un grammage supérieur ou égal à environ 70 $g/m^2$.

9. Feuille selon l'une quelconque des revendications précédentes, **caractérisée en ce qu'**elle présente une longueur d'environ 140mm et une largeur d'environ 110mm.

**10.** Feuille selon l'une quelconque des revendications précédentes, **caractérisée en ce que** lesdits plis formant l'une au moins des surfaces externes de ladite feuille sont de type TAD.

**11.** Rouleau comprenant un ensemble de feuilles selon l'une quelconque des revendications précédentes, **caractérisé en ce qu'**il comprend entre 60 et 120 feuilles.

**12.** Procédé de fabrication de feuilles absorbantes délitables multiplis selon l'une quelconque des revendications 1 à 10, **caractérisé en ce qu'**il consiste à gaufrer séparément et différemment au moins trois des plis formant ladite feuille, à associer chimiquement lesdits plis grâce à une unique unité de collage puis à associer mécaniquement l'ensemble des plis grâce à un cylindre de pression.

**13.** Procédé de fabrication de feuilles absorbantes délitables multi-plis selon l'une quelconque des revendications 1 à 10 consistant, en phase humide, à projeter un ensemble de fibres papetières sur une toile afin de former un matelas, à transférer ce matelas contre la surface d'un cylindre de séchage poreux, à faire traverser le matelas par des jets d'air issus dudit cylindre puis à transférer le pli ainsi formé sur un cylindre de crêpage, **caractérisé en ce qu'**il consiste à former ainsi plusieurs plis indépendamment puis à associer ensemble lesdits plis en phase de transformation par déformation mécanique.

**14.** Procédé de fabrication selon l'une quelconque des revendications 11 ou 12, **caractérisé en ce que** les plis sont associés mécaniquement entre eux sous une pression spécifique minimale d'environ 3 kg/mm$^2$.

**15.** Feuille absorbante délitable multi plis **caractérisée en ce qu'**elle comprend des plis fabriqués selon la revendication 11 et/ou des plis fabriqués selon la revendication 12.

**FIG.1**

R

**FIG.3**

FIG.2

EP 1 845 193 A1

**Office européen
des brevets**

**RAPPORT PARTIEL
DE RECHERCHE EUROPEENNE**

qui selon la règle 45 de la Convention sur le brevet
européen est consideré, aux fins de la procédure ultérieure,
comme le rapport de la recherche européenne

Numéro de la demande

EP 06 29 0613

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 98/52745 A (KIMBERLY CLARK CO [US]) 26 novembre 1998 (1998-11-26) * le document en entier * ----- | 1-15 | INV. D21H27/00 B31F1/07 |
| X | EP 0 264 676 A (MIRA LANZA SPA [IT]) 27 avril 1988 (1988-04-27) * colonne 4, ligne 6 - colonne 7, ligne 39; revendications 1-7; figures 1-3 * ----- | 1-15 | |
| X | FR 2 775 698 A1 (FORT JAMES FRANCE [FR]) 10 septembre 1999 (1999-09-10) * le document en entier * ----- | 1-15 | |
| A | EP 1 428 654 A (SCA HYGIENE PROD GMBH [DE]) 16 juin 2004 (2004-06-16) * le document en entier * ----- | 1-15 | |

**DOMAINES TECHNIQUES RECHERCHES (IPC)**

D21H
B31F

## RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| Munich | 9 novembre 2006 | Grondin, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................
& : membre de la même famille, document correspondant

EPO FORM 1503 03.82 (P04C08)

**Office européen des brevets**

**RECHERCHE INCOMPLETE FEUILLE SUPPLEMENTAIRE C**

Numéro de la demande

EP 06 29 0613

Revendications ayant fait l'objet de recherches incomplètes:
1-15

Revendications n'ayant pas fait l'objet de recherches:
-

Raison pour la limitation de la recherche:

La revendication 1 ne remplit pas les conditions de clarté (Article 84 CBE).
Le coefficient Knove qui a été artificiellement créé comprend pas moins de huit paramètres différents.
Pour aucun de ces paramètres un domaine limite de valeurs n'a été défini dans la revendication 1.
Il en résulte que chaque paramètre du coefficient peut être choisi arbitrairement, aussi petit ou grand que souhaité, pour obtenir la valeur souhaitée du coefficient, et ce sans aucune garantie que le résultat final va effectivement résoudre le problème posé qui est de fournir un papier à la fois résistant, d'une certaine épaisseur et d'une grande douceur (voir p.1 de la description).
Il apparaît que la seule caractéristique technique cohérente de la revendication 1 est que la feuille doive comprendre au moins trois plis.
Il semble par exemple, au vu du tableau d'exemples de la description p.11, que le produit connu "Moltonel" aurait un coefficient Knove convenable en choisissant simplement une feuille d'une surface appropriée.
Par ailleurs, il apparaît difficile de comparer effectivement les produits "selon l'invention" avec les produits de l'art antérieur comme le tableau comparatif de la description p.11 ne donne que des feuilles ayant au moins 5 plis pour "l'invention" contre des feuilles n'ayant qu'au maximum 3 plis pour l'art antérieur. Il semble évident qu'augmenter le nombre de plis d'une feuille de l'art antérieur pour augmenter sa résistance, son épaisseur et/ou sa souplesse ne peut être considéré comme une démarche inventive pour l'homme de l'art.

La présente recherche a été effectuée pour une feuille ayant des paramètres dans le cadre du domaine des limites fournies par le tableau de la description p.11 et en particulier pour des feuilles ayant au moins 5 plis.

**EP 1 845 193 A1**

## ANNEXE AU RAPPORT DE RECHERCHE EUROPEENNE
## RELATIF A LA DEMANDE DE BREVET EUROPEEN NO.

EP 06 29 0613

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-11-2006

| Document brevet cité au rapport de recherche | | Date de publication | Membre(s) de la famille de brevet(s) | | Date de publication |
|---|---|---|---|---|---|
| WO 9852745 | A | 26-11-1998 | AU | 7391098 A | 11-12-1998 |
| | | | CA | 2285927 A1 | 26-11-1998 |
| EP 0264676 | A | 27-04-1988 | IT | 1215063 B | 31-01-1990 |
| FR 2775698 | A1 | 10-09-1999 | DK | 1084300 T3 | 02-10-2006 |
| | | | EP | 1084300 A1 | 21-03-2001 |
| | | | WO | 9945205 A1 | 10-09-1999 |
| | | | TR | 200002581 T2 | 21-11-2000 |
| | | | US | 6805766 B1 | 19-10-2004 |
| | | | US | 6599614 B1 | 29-07-2003 |
| EP 1428654 | A | 16-06-2004 | WO | 2004052635 A1 | 24-06-2004 |

EPO FORM P0460

Pour tout renseignement concernant cette annexe : voir Journal Officiel de l'Office européen des brevets, No.12/82

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9720107 A
- US 3377224 A
- EP 864014 B1
- EP 1353010 A